# EUROPEAN PATENT APPLICATION

(11) **EP 4 365 377 A1**
(43) Date of publication of application: **08.05.2024**
(21) Application number: 23205230.8
(22) Date of filing: 23.10.2023
(51) Int. Cl.: E02F 9/24, E02F 9/26

(54) **WORK MACHINE CONTROL METHOD, WORK MACHINE CONTROL PROGRAM, WORK MACHINE CONTROL SYSTEM, AND WORK MACHINE**

(30) Priority: 02.11.2022 JP 2022176070
(71) Applicant: Yanmar Holdings Co., Ltd., Osaka-shi, Osaka (JP)
(72) Inventor: DANGUCHI, Masashi, Chikugo-shi (JP); TANAKA, Katashi, Chikugo-shi (JP)
(74) Representative: Dennemeyer & Associates S.A.

(57) **Abstract**

[Problem] To provide a work machine control method, a work machine control program, a work machine control system, and a work machine that make it easy for an operator to intuitively understand various types of information on a work machine operation.

[Solution] A work machine control method includes acquiring a captured image of a monitored area around a work machine, causing an overhead image Im100 based on the captured image to be displayed in a first display region R11, and causing at least part of a specific image Im200 to be displayed in a second display region R12. The first display region R11 is a region that is part of a display screen Dp1 displayed on a display device and that has a shape obtained by cutting out, as a cutout region R13, a portion of the display screen Dp1 in a circumferential direction as viewed from an own machine reference position P1 that corresponds to a position of the work machine in plan view. The second display region R12 is a region that is part of the display screen Dp1 and that is located in the cutout region R13.

## Description

### TECHNICAL FIELD

The present invention relates to a work machine control method, a work machine control program, and a work machine control system that are used for a work machine having a function of detecting a detection target in a monitored area around the work machine, and to the work machine.

### BACKGROUND ART

As a related technique, a work machine (excavator) is known in which an output image is generated based on a plurality of input images captured by a camera mounted on an upper turning body (see, for example, Patent Document 1). The work machine according to the related technique includes cameras (image capturing devices) that are mounted at three portions of the upper turning body: a left portion, a right portion, and a rear portion of the upper turning body to capture images of areas in three directions around the upper turning body. In the work machine, images of at least areas on the left side, right side, and rear side of the work machine are displayed on a display device (display unit) provided in an operator cab, irrespective of the orientation of a lower traveling body, and an image (overhead image) showing the work machine as viewed from the sky is generated as an output image.

### PRIOR ART DOCUMENT

### PATENT DOCUMENT

Patent Document 1: JP 2018-035669 A

### SUMMARY OF INVENTION

### TECHNICAL PROBLEM

In the related technique, an overhead image is merely displayed on the display device, and it may be difficult for an operator to intuitively understand various types of information on the operation of the work machine.

An object of the present invention is to provide a work machine control method, a work machine control program, a work machine control system, and a work machine that make it easy for an operator to intuitively understand various types of information on a work machine operation.

### SOLUTION TO PROBLEM

A work machine control method according to an aspect of the present invention includes acquiring a captured image of a monitored area around a work machine, causing an overhead image based on the captured image to be displayed in a first display region, and causing at least part of a specific image to be displayed in a second display region. The first display region is a region that is part of a display screen displayed on a display device and that has a shape obtained by cutting out, as a cutout region, a portion of the display screen in a circumferential direction as viewed from an own machine reference position that corresponds to a position of the work machine in plan view. The second display region is a region that is part of the display screen and that is located in the cutout region.

A work machine control program according to an aspect of the present invention is a program for causing one or more processors to perform the work machine control method.

A work machine control system according to an aspect of the present invention includes an image acquisition unit, a first display processing unit, and a second display processing unit. The image acquisition unit acquires a captured image of a monitored area around a work machine. The first display processing unit causes an overhead image based on the captured image to be displayed in a first display region that is part of a display screen displayed on a display device and that has a shape obtained by cutting out, as a cutout region, a portion of the display screen in a circumferential direction as viewed from an own machine reference position that corresponds to a position of the work machine in plan view. The second display processing unit causes at least part of a specific image to be displayed in a second display region that is part of the display screen and that is located in the cutout region.

A work machine according to an aspect of the present invention includes the work machine control system, and a body on which the display device is mounted.

### ADVANTAGEOUS EFFECTS OF INVENTION

The present invention provides a work machine control method, a work machine control program, a work machine control system, and a work machine that make it easy for an operator to intuitively understand various types of information on a work machine operation.

### BRIEF DESCRIPTION OF DRAWINGS

FIG. 1 is a schematic perspective view showing an overall configuration of a work machine according to Embodiment 1.
FIG. 2 is a schematic diagram showing a hydraulic circuit and the like of the work machine according to Embodiment 1.
FIG. 3 is a schematic plan view schematically showing a monitored area that is set around the work machine according to Embodiment 1 as viewed from above.
FIG. 4 is a schematic external view of a display device on which a display screen is displayed by a work machine control system according to Embodiment 1.
FIG. 5 is a diagram showing an example of the display screen displayed by the work machine control system according to Embodiment 1.
FIG. 6 is a diagram showing an example of the display in a second region on the display screen displayed by the work machine control system according to Embodiment 1.
FIG. 7 is a diagram showing an example of the display of an overhead image displayed by the work machine control system according to Embodiment 1.
FIG. 8 is a diagram showing an example of the display of an overhead image displayed by the work machine control system according to Embodiment 1.
FIG. 9 is a flowchart showing an example of the operation of the work machine control system according to Embodiment 1.
FIG. 10 is a diagram showing an example of the display of an overhead image displayed by a work machine control system according to Embodiment 2.
FIG. 11 is a diagram showing an example of the display of an overhead image displayed by the work machine control system according to Embodiment 2.

### DESCRIPTION OF EMBODIMENTS

Embodiments of the present invention will be described below with reference to the accompanying drawings. The following embodiments are examples that embody the present invention, and do not intend to limit the technical scope of the present invention.

### (Embodiment 1)

### [1] Overall configuration

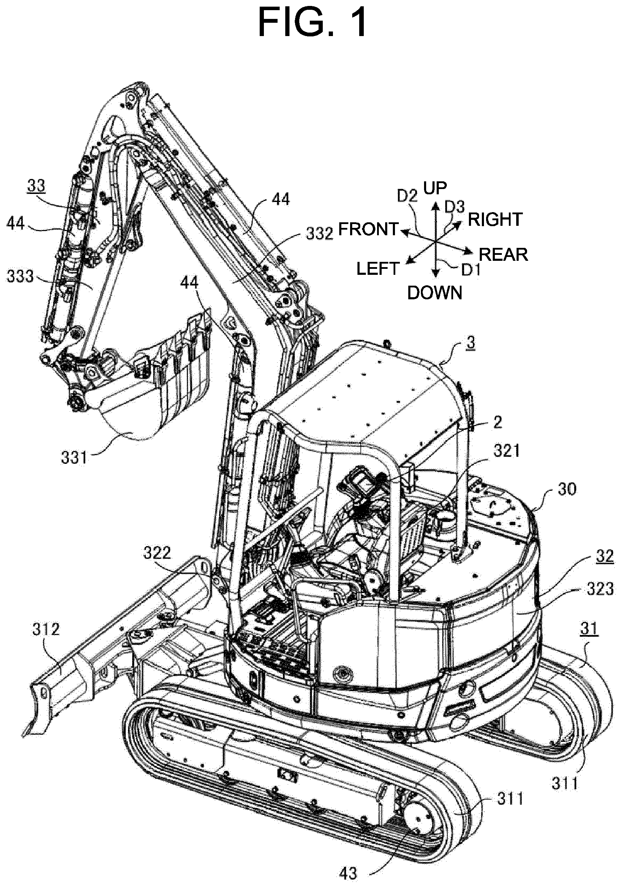

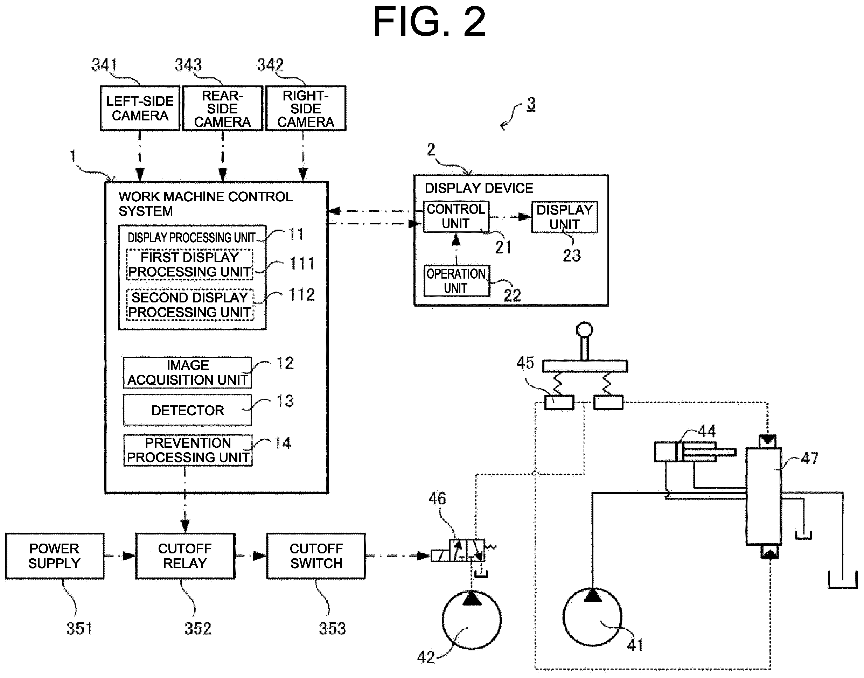

As shown in FIG. 1, a work machine 3 according to the present embodiment has a body 30 including a traveling unit 31, a turning unit 32, and a work unit 33. As shown in FIG. 2, the work machine 3 further includes a work machine control system 1 (hereinafter also simply referred to as a "control system 1"). In addition, the body 30 further includes a display device 2, an operation device, and the like.

The term "work machine" as used in the present disclosure refers to various machines used to perform work, and refers to, for example, a work vehicle such as a backhoe (including a hydraulic excavator, a mini excavator, etc.), a wheel loader, or a carrier. The work machine 3 includes the work unit 33 that is configured to be able to perform one or more types of work including at least hanging work. The work machine 3 may not necessarily be a "vehicle", and may be, for example, a work ship, a work flying object such as a drone or a multicopter, or the like. Furthermore, the work machine 3 may not necessarily be a construction machine, and may be, for example, an agricultural machine such as a rice transplanter, a tractor, or a combine harvester. In the present embodiment, unless otherwise specified, an example will be described in which the work machine 3 is a backhoe having a hanging function (crane function) and is capable of performing work such as excavation work, ground leveling work, trench excavation work, or loading work, in addition to hanging work.

For convenience of description, in the present embodiment, an up-down direction D1 is defined as the vertical direction while the work machine 3 is in a usable state. Furthermore, a front-rear direction D2 and a left-right direction D3 are defined with respect to the direction as viewed from a user (operator) who is present in (an operator unit 321 of) the work machine 3 while the turning unit 32 is not being turned. In other words, any direction described in the present embodiment is defined as a direction with respect to the body 30 of the work machine 3. The body 30 moves toward the "front side" when the work machine 3 moves forward, and the body 30 moves toward the "rear side" when the work machine 3 moves rearward. Similarly, a front end portion of the body 30 moves toward the "right side" when the work machine 3 makes a right turn, and the front end portion of the body 30 moves toward the "left side" when the work machine 3 makes a left turn. However, the direction of the work machine 3 in use is not limited to these directions.

The work machine 3 includes an engine that serves as a power source. In the work machine 3, for example, a hydraulic pump 41 (see FIG. 2) is driven by the engine, and hydraulic oil is supplied from the hydraulic pump 41 to hydraulic actuators (including a hydraulic motor 43, a hydraulic cylinder 44, etc.) of the components of the body 30 to drive the body 30. For example, a user (operator) who is present in the operator unit 321 of the body 30 operates an operation lever of the operation device or the like to control the work machine 3.

In the present embodiment, as described above, the work machine 3 is expected to be a riding-type backhoe; thus, according to an operation performed by a user (operator) who is present in the operator unit 321, the work unit 33 is driven and performs work such as excavation work. The operator unit 321 in which the user is present is provided in the turning unit 32.

The traveling unit 31 has a traveling function, and is configured to be able to travel (including turning) on the ground. The traveling unit 31 includes, for example, a pair of left and right crawlers 311, a blade 312, and the like. The traveling unit 31 further includes, for example, the hydraulic motor 43 (hydraulic actuator) for traveling, in order to drive the crawlers 311.

The turning unit 32 is located above the traveling unit 31, and is configured to be able to turn around a rotation axis in the vertical direction with respect to the traveling unit 31. The turning unit 32 includes a hydraulic motor (hydraulic actuator) for turning, and the like. In addition to the operator unit 321, the turning unit 32 includes the engine, the hydraulic pump 41, and the like. Furthermore, a front end portion of the turning unit 32 is provided with a boom bracket 322 to which the work unit 33 is attached.

The work unit 33 is configured to be able to perform work including hanging work. The work unit 33 is supported by the boom bracket 322 of the turning unit 32 and performs work. The work unit 33 includes a bucket 331, a boom 332, an arm 333, and the like. The work unit 33 further includes hydraulic actuators (including the hydraulic cylinder 44, the hydraulic motor, etc.) for driving the components.

The bucket 331 is a type of attachment (work tool) attached to the body 30 of the work machine 3, and is composed of an arbitrary tool selected from a plurality of types of attachments according to the work content. For example, the bucket 331 is detachably attached to the body 30, and is replaced according to the work content. In addition to the bucket 331, examples of attachments for the work machine 3 include various tools such as a breaker, an auger, a crusher, a fork, a fork claw, a steel frame cutter, an asphalt milling machine, a mower, a ripper, a mulcher, a tilt rotator, and a tamper. The work unit 33 drives the bucket 331 using power from a drive device to perform work.

The boom 332 is rotatably supported by the boom bracket 322 of the turning unit 32. Specifically, the boom 332 is supported by the boom bracket 322 to be rotatable around a rotation axis in the horizontal direction. The boom 332 extends upward from a base end portion of the boom 332 supported by the boom bracket 322. The arm 333 is coupled to a tip of the boom 332. The arm 333 is supported by the boom 332 to be rotatable around a rotation axis in the horizontal direction. The bucket 331 is attached to a tip of the arm 333.

The work unit 33 is operated by power received from the engine as a power source. Specifically, the hydraulic pump 41 is driven by the engine, and hydraulic oil is supplied from the hydraulic pump 41 to the hydraulic actuators (the hydraulic cylinder 44, etc.) of the work unit 33 to cause the components (the bucket 331, the boom 332, and the arm 333) of the work unit 33 to be operated.

In the present embodiment, in particular, the work unit 33 has an articulated structure in which the boom 332 and the arm 333 are configured to be individually rotatable. Thus, each of the boom 332 and the arm 333 can be rotated around the rotation axis in the horizontal direction, for example, to allow the articulated work unit 33 including the boom 332 and the arm 333 as a whole to be extended or retracted.

As with the work unit 33, each of the traveling unit 31 and the turning unit 32 is operated by power received from the engine as a power source. That is, hydraulic oil is supplied from the hydraulic pump 41 to the hydraulic motor 43 of the traveling unit 31, the hydraulic motor of the turning unit 32, and the like to cause the turning unit 32 and the traveling unit 31 to be operated.

As described above, the engine functions as a power source that supplies power to the components. The engine is mounted together with the hydraulic pump 41 and the like in the turning unit 32. The present embodiment describes an example in which the engine is a diesel engine. The engine is driven by fuel (light oil in this case) supplied from a fuel tank.

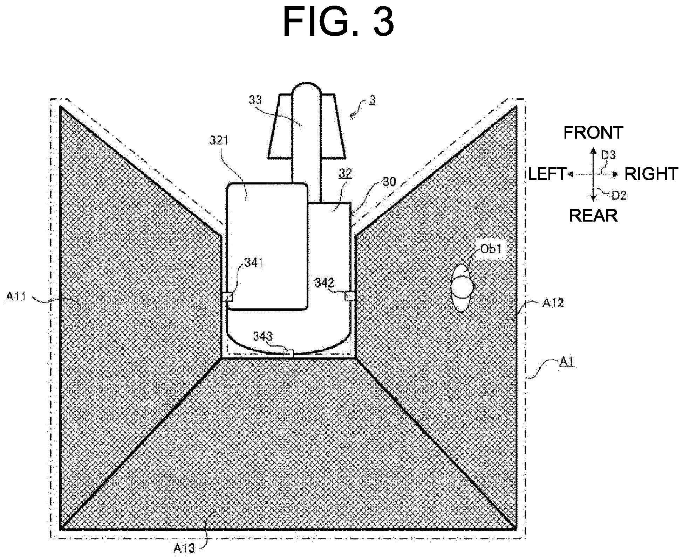

The body 30 includes various sensors (including cameras) for detecting a detection target Ob1 (see FIG. 3) in a monitored area A1 (see FIG. 3) around the work machine 3, such as cameras that capture images of the areas around the body 30. The present embodiment describes an example in which, as shown in FIG. 3, the turning unit 32 of the body 30 includes a plurality of (three in this case) cameras including a left-side camera 341, a right-side camera 342, and a rear-side camera 343. The left-side camera 341, the right-side camera 342, and the rear-side camera 343 are connected to the control system 1, and capture images and output the captured images to the control system 1. FIG. 3 is a plan view showing the work machine 3 as viewed from above, and schematically shows the monitored area A1 set around the work machine 3, the detection target Ob1, and the body 30 of the work machine 3 (including the left-side camera 341, the right-side camera 342, and the rear-side camera 343).

The left-side camera 341, the right-side camera 342, and the rear-side camera 343 are respectively directed toward the left side, right side, and rear side of the operator unit 321 of the turning unit 32 so that the left-side camera 341, the right-side camera 342, and the rear-side camera 343 can respectively capture an image of a portion of the monitored area A1 on the left side, right side, and rear side of the operator unit 321 as viewed from an operator who is present in the operator unit 321. That is, as shown in FIG. 3, the monitored area A1 includes a plurality of (three in this case) small areas A11, A12, and A13, and of these areas, the left-side camera 341 captures an image of the small area A11 (left-side area) that is located on the left side of the operator unit 321 as viewed from an operator who is present in the operator unit 321. Similarly, the right-side camera 342 captures an image of the small area A12 (right-side area) that is located on the right side of the operator unit 321 as viewed from an operator who is present in the operator unit 321, and the rear-side camera 343 captures an image of the small area A13 (rear-side area) that is located on the rear side of the operator unit 321 as viewed from an operator who is present in the operator unit 321. This enables the left-side camera 341, the right-side camera 342, and the rear-side camera 343 to cover the areas on the lateral sides (left and right sides) and the rear side of the operator unit 321, which are likely to be blind spots for the operator.

FIG. 2 schematically shows a hydraulic circuit and an electrical circuit (electrical connection relationship) of the work machine 3 according to the present embodiment. In FIG. 2, the solid line indicates a high-pressure (hydraulic-oil) oil passage, the dotted line indicates a low-pressure (pilot-oil) oil passage, and the dot-dashed arrow indicates an electrical signal path.

As shown in FIG. 2, in addition to the hydraulic pump 41, the hydraulic motor 43 (not shown in FIG. 2), and the hydraulic cylinder 44, the work machine 3 includes a pilot pump 42, a remote control valve 45, a control valve 46, a direction switching valve (control valve) 47, and the like.

The hydraulic oil from the hydraulic pump 41 driven by the engine is supplied to the hydraulic motor 43 of the traveling unit 31, the hydraulic motor of the turning unit 32, the hydraulic cylinder 44 of the work unit 33, and the like. Thus, the hydraulic actuators such as the hydraulic motor 43 and the hydraulic cylinder 44 are driven.

Each of the hydraulic actuators such as the hydraulic motor 43 and the hydraulic cylinder 44 includes a pilot-operated direction switching valve 47 that is capable of switching the direction and flow rate of the hydraulic oil from the hydraulic pump 41. Pilot oil serving as an input command is supplied from the pilot pump 42 to the direction switching valves 47 to drive the direction switching valves 47.

For example, the remote control valve 45 is provided in a pilot oil supply passage to the direction switching valve 47 corresponding to the hydraulic cylinder 44 of the work unit 33. The remote control valve 45 outputs a work operation command for the work unit 33 in response to an operation of the operation lever. The work operation command causes the work unit 33 to perform an extending action, a retracting action, or the like. A solenoid control valve 46 (solenoid valve) is inserted between the remote control valve 45 and the pilot pump 42. The control valve 46 is connected to a power supply 351 via a cutoff relay 352 and a cutoff switch 353, and is operated according to a current supplied from the power supply 351.

Similarly, a remote control valve is also provided in a pilot oil supply passage to the direction switching valve corresponding to the hydraulic motor 43 of the traveling unit 31. The remote control valve outputs a traveling operation command for the traveling unit 31 in response to an operation of the operation lever. The traveling operation command causes the traveling unit 31 to perform a traveling action (forward movement, rearward movement, etc.). Furthermore, a remote control valve is also provided in a pilot oil supply passage to the direction switching valve corresponding to the hydraulic motor of the turning unit 32. The remote control valve outputs a turning operation command for the turning unit 32 in response to an operation of the operation lever. The turning operation command causes the turning unit 32 to perform a turning action (left turn, right turn, etc.). A solenoid control valve 46 (solenoid valve) is also inserted between each of these remote control valves and the pilot pump 42. The control valve 46 is connected to a power supply 351 via a cutoff relay 352 and a cutoff switch 353, and is operated according to a current supplied from the power supply 351.

The control valve 46 between the remote control valve 45 and the pilot pump 42 opens a pilot oil flow path from the pilot pump 42 to the remote control valve 45 while the control valve 46 is in an energized state, that is, while a current is supplied to the control valve 46, and the control valve 46 closes the pilot oil flow path while the control valve 46 is in a non-energized state, that is, while the current supplied to the control valve 46 is shut off. Thus, when the current supplied to the control valve 46 is shut off, the hydraulic actuator corresponding to the remote control valve 45 becomes unable to be driven, forcibly stopping the output from the hydraulic actuator irrespective of the operation of the operation lever.

The cutoff relay 352 is connected to the control system 1, and is switched between on and off according to a control signal (electrical signal) from the control system 1. The cutoff switch 353 is switched between on and off according to an operation of a cutoff lever. For example, the cutoff switch 353 is on when the cutoff lever is operated downward.

Accordingly, when both the cutoff relay 352 and the cutoff switch 353 are on, the control valve 46 is in the energized state, and the pilot oil flow path from the pilot pump 42 to the remote control valve 45 is opened; thus, the hydraulic actuator is driven in response to an operation of the operation lever. On the other hand, when at least one of the cutoff relay 352 and the cutoff switch 353 is off, the control valve 46 is in the non-energized state, and the pilot oil flow path is closed; thus, the hydraulic actuator is unable to be driven.

For example, when at least one of the cutoff relay 352 and the cutoff switch 353 connected to the control valve 46 inserted between the remote control valve corresponding to the hydraulic motor of the turning unit 32 and the pilot pump 42 is off, the hydraulic motor of the turning unit 32 is unable to be driven. In this state, the output from the hydraulic actuator (hydraulic motor of the turning unit 32) is forcibly stopped irrespective of the operation of the operation lever, thus prohibiting the turning unit 32 from performing a turning action.

The control system 1 is mainly composed of a computer system including one or more processors such as a central processing unit (CPU) and one or more memories such as a read only memory (ROM) and a random access memory (RAM), and performs various types of processing (information processing). In the present embodiment, the control system 1 is an integrated controller that controls the entire work machine 3, and is composed of, for example, an electronic control unit (ECU). However, the control system 1 may be provided separately from the integrated controller. The control system 1 will be specifically described in "[2] Configuration of control system".

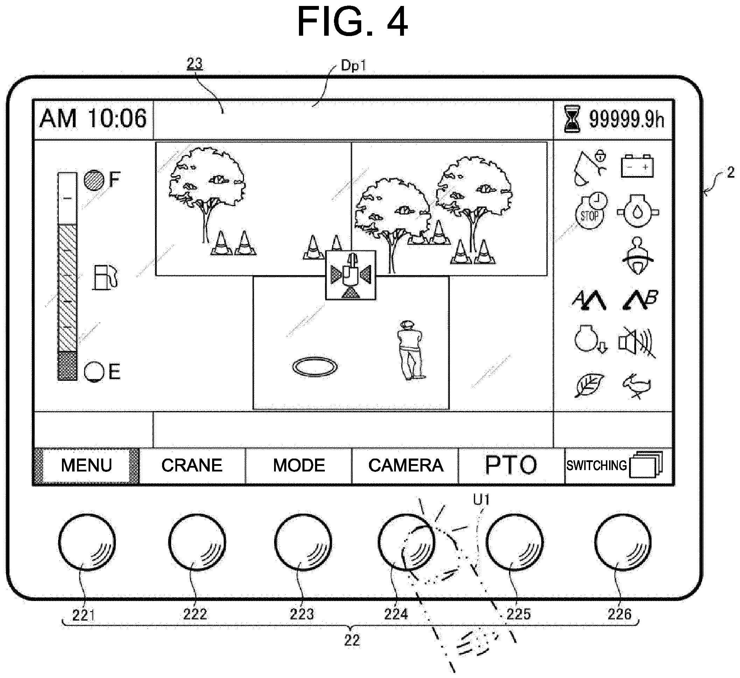

The display device 2 is a user interface that is provided in the operator unit 321 of the body 30 and that is used to receive an operation input performed by a user (operator) and to output various types of information to the user. For example, the display device 2 outputs an electrical signal corresponding to an operation performed by a user to receive various operations performed by the user. This enables the user (operator) to visually recognize a display screen Dp1 (see FIG. 4) that is displayed on the display device 2 and to operate the display device 2 as necessary.

As shown in FIG. 2, the display device 2 includes a control unit 21, an operation unit 22, and a display unit 23. The display device 2 is configured to be able to communicate with the control system 1, and is capable of exchanging data with the control system 1. The present embodiment describes an example in which the display device 2 is a dedicated device used for the work machine 3.

The control unit 21 controls the display device 2 according to data from the control system 1. Specifically, the control unit 21 outputs an electrical signal corresponding to an operation that is performed by a user and received by the operation unit 22, and causes the display screen Dp1 generated by the control system 1 to be displayed on the display unit 23.

The operation unit 22 is a user interface for receiving an operation input performed by a user (operator) on the display screen Dp1 displayed on the display unit 23. For example, the operation unit 22 outputs an electrical signal corresponding to an operation performed by a user U1 (see FIG. 4) to receive various operations performed by the user U1. The present embodiment describes an example in which, as shown in FIG. 4, the operation unit 22 includes a plurality of (six in this case) mechanical push-button switches 221 to 226. The plurality of push-button switches 221 to 226 are arranged close to a display region of the display unit 23 (below the display region in the example shown in FIG. 4) so that the plurality of push-button switches 221 to 226 are arranged along the periphery of the display region. The plurality of push-button switches 221 to 226 are associated with items displayed on the display screen Dp1 (described below), and when one of the plurality of push-button switches 221 to 226 is operated, the corresponding item on the display screen Dp1 is operated (selected).

The operation unit 22 may include a touch panel, an operation dial, and the like. In such a case as well, one of the items on the display screen Dp1 is operated (selected) according to an operation received by the operation unit 22.

The display unit 23 is a user interface for presenting information to the user U1 (operator), such as a liquid crystal display or organic EL display that displays various types of information. The display unit 23 displays various types of information to present such information to the user. The present embodiment describes an example in which the display unit 23 is a full-color liquid crystal display with a backlight, and as shown in FIG. 4, the display unit 23 has a "laterally extending" display region extending in the lateral direction.

The display device 2 presents various types of information on the display screen Dp1 to the user U1 (operator) who operates the work machine 3. Thus, the user U1 who operates the work machine 3 can view the display screen Dp1 displayed on the display device 2 to obtain various types of visual information related to the work machine 3. For example, when the display device 2 displays information on the operating state of the work machine 3 such as cooling water temperature and hydraulic oil temperature, the user U1 can view, on the display device 2, the information on the operating state of the work machine 3 that is required to operate the work machine 3. The display device 2 is also capable of displaying, on the display screen Dp1, images of the areas around the work machine 3 (images of the monitored area A1) that are captured by the left-side camera 341, the right-side camera 342, and the rear-side camera 343. This enables the user U1 (operator) who operates the work machine 3 to view, on the display screen Dp1 displayed on the display device 2, for example, the situation in the areas on the lateral sides and rear side of the work machine 3, which are likely to be blind spots from the operator unit 321.

Furthermore, the display device 2 may have a function of outputting a sound (including a voice) to the user U1 (operator). In such a case, the display device 2 outputs a sound such as a beep or a voice according to a sound control signal from the control system 1.

In addition to the components describe above, the body 30 further includes the operation lever, the cutoff lever, a communication terminal, the fuel tank, a battery, and the like. Furthermore, the body 30 includes sensors for monitoring the operating state of the body 30 such as a cooling water temperature sensor, a hydraulic oil temperature sensor, a rotational speed meter that measures the engine rotational speed, and an hour meter that measures the operating time. In addition, the body 30 also includes a sensor that detects, for example, the state of the cutoff lever, the starter key switch, and the like.

### [2] Configuration of control system

Next, a configuration of the control system 1 according to the present embodiment will be described with reference to FIG. 2. The control system 1 controls the display device 2 to cause the display device 2 to display the display screen Dp1. In the present embodiment, as described above, the display device 2 is mounted on the body 30 of the work machine 3. The control system 1 is a component of the work machine 3, and
constitutes the work machine 3 together with the body 30 and the like. In other words, the work machine 3 according to the present embodiment includes at least the control system 1, and the body 30 (including the traveling unit 31, the turning unit 32, and the work unit 33) on which the display device 2 is mounted.

The term "screen" as in the display screen Dp1 used in the present disclosure refers to a video (image) displayed on the display device 2, and includes an icon, a figure, a photograph, text, a video, and the like. Thus, the control system 1 can cause the display device 2 to display, for example, the display screen Dp1 including an icon that indicates information on the operating state of the work machine 3 such as cooling water temperature and hydraulic oil temperature. When the display screen Dp1 includes a video and the like, the display screen Dp1 includes not a constant video but a video that changes every moment.

As shown in FIG. 2, the control system 1 includes a display processing unit 11, an image acquisition unit 12, a detector 13, and a prevention processing unit 14. The present embodiment describes an example in which the control system 1 is mainly composed of a computer system including one or more processors; thus, the one or more processors execute a work machine control program to implement these plurality of functional units (the display processing unit 11, etc.). The plurality of functional units included in the control system 1 may be dispersed in a plurality of housings, or may be provided in a single housing.

The control system 1 is configured to be able to communicate with the devices provided in the components of the body 30. Thus, the control system 1 is connected to at least the display device 2, the cutoff relay 352, the left-side camera 341, the right-side camera 342, the rear-side camera 343, and the like. Accordingly, the control system 1 can control the display device 2 and the like, control the cutoff relay 352 to control the control valves 46, and acquire images captured by the left-side camera 341, the right-side camera 342, the rear-side camera 343, and the like. The control system 1 may directly exchange various types of information (data) with the devices, or may indirectly exchange such information (data) with the devices via a relay or the like.

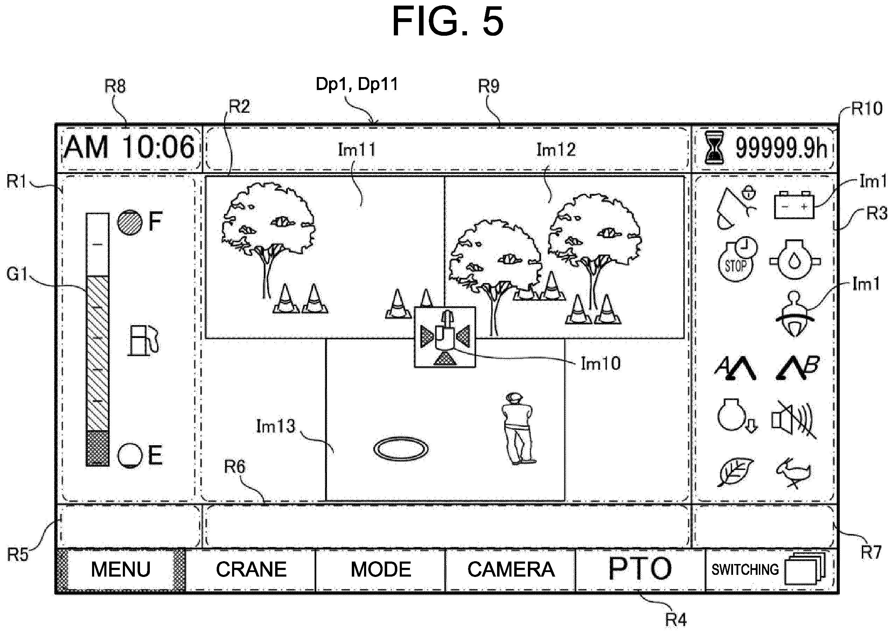

The display processing unit 11 performs a display process of causing the display device 2 to display at least the display screen Dp1. Specifically, for example, based on data acquired by the image acquisition unit 12, the display processing unit 11 generates the display screen Dp1, and controls the display device 2 to cause the display unit 23 of the display device 2 to display the display screen Dp1. Furthermore, the display processing unit 11 is operated according to an operation received by the operation unit 22 of the display device 2. For example, the display processing unit 11 causes a captured image Im11 that is captured by the left-side camera 341, a captured image Im12 that is captured by the right-side camera 342, and a captured image Im13 that is captured by the rear-side camera 343 (see FIG. 5) to be displayed on the display screen Dp1. That is, the display processing unit 11 causes the display device 2 to display images of the monitored area A1 (the small areas A11, A12, and A13) around the work machine 3.

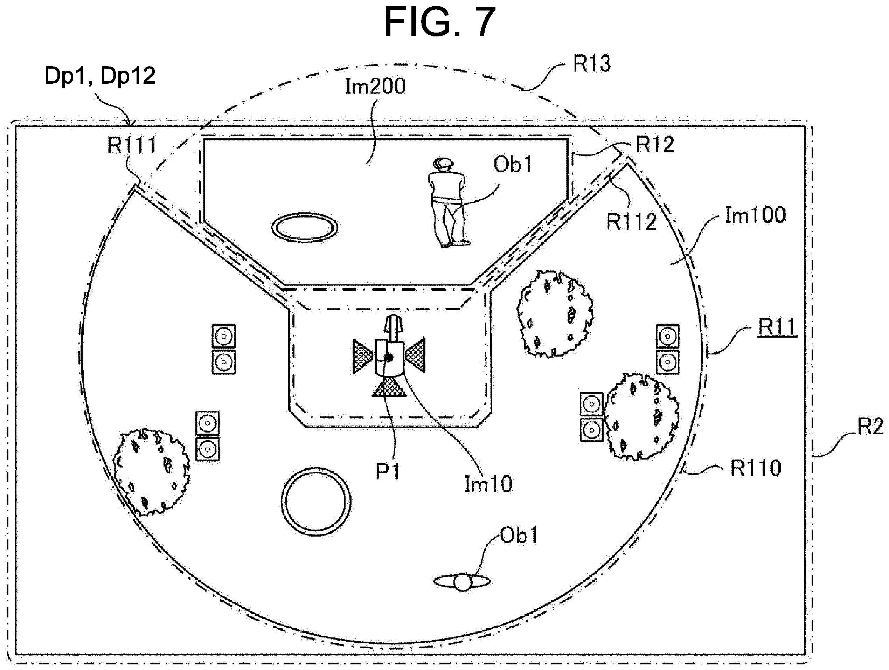

The display processing unit 11 has a full screen mode in which a second region R2 (see FIG. 5) of the display screen Dp1 is displayed in full screen (in an enlarged view). Furthermore, the display processing unit 11 can cause, at least in the full screen mode, an overhead image Im100 (see FIG. 7) that is generated based on the captured images Im11, Im12, and Im13 and at least part of a specific image Im200 (see FIG. 7) that is different from the overhead image Im100 to be displayed on the display screen Dp1.

The display processing unit 11 includes a first display processing unit 111 and a second display processing unit 112.

Although details will be described below, the first display processing unit 111 performs a first display process of causing the overhead image Im100 generated based on the captured images Im11, Im12, and Im13 to be displayed in a first display region R11 (see FIG. 7) of the display screen Dp1 displayed on the display device 2. The second display processing unit 112 performs a second display process of causing at least part of the specific image Im200 to be displayed in a second display region R12 (see FIG. 7) of the display screen Dp1 displayed on the display device 2.

Furthermore, in addition to the captured images Im11, Im12, and Im13, the overhead image Im100, the specific image Im200, and the like, the display processing unit 11 displays, on the display screen Dp1, for example, a detection object indicating a detection result that is obtained by the detector 13 and that indicates whether the detection target Ob1 is present in the monitored area A1. The detection object is displayed in different display modes according to the detection result obtained by the detector 13. Thus, the display mode of the detection object on the display screen Dp1 is varied depending on whether the detection target Ob1 is present in the monitored area A1.

The term "object" as in the detection object used in the present disclosure includes a mark, an icon, a figure, a photograph, text, a video, and the like that are displayed on the display screen Dp1, and a combination thereof. The term "display mode" as used in the present disclosure includes the displayed color, size (including line thickness, etc.), shape, action state (including animation, rotating/stationary state, etc.), presence or absence of display, display pattern (including blinking pattern, etc.), and the like (of an object), and a combination thereof.

In short, the display processing unit 11 causes the display mode such as the displayed color of the detection object to vary according to the detection result obtained by the detector 13.

The image acquisition unit 12 performs an image acquisition process of acquiring a captured image of the monitored area A1 around the work machine 3. In the present embodiment, the image acquisition unit 12 acquires outputs from the left-side camera 341, the right-side camera 342, and the rear-side camera 343 on a regular or irregular basis. That is, the image acquisition unit 12 acquires image data (captured image) on the monitored area A1 (the small areas A11, A12, and A13) around the work machine 3. The data acquired by the image acquisition unit 12 is stored, for example, in the one or more memories or the like.

The detector 13 performs a detection process of detecting the detection target Ob1 in the monitored area A1 around the work machine 3. Thus, the detector 13 determines whether the detection target Ob1 is present in the monitored area A1, and outputs a detection result that indicates whether the detection target Ob1 is present in the monitored area A1. The present embodiment describes an example in which the detection target Ob1 is a "person". That is, when a movement of the work machine 3 or a movement of a "person" around the work machine 3 causes the "person" to enter the monitored area A1 around the work machine 3, the detector 13 detects the "person" as the detection target Ob1. When a plurality of detection targets Ob1 are present in the monitored area A1, the detector 13 may also detect the number of detection targets Ob1.

In the present embodiment, the detector 13 detects the detection target Ob1 in the monitored area A1 based on an output (image data) from the left-side camera 341, the right-side camera 342, and the rear-side camera 343. Specifically, the detector 13 performs image processing on image data acquired by the image acquisition unit 12 to extract feature values in the image, and determines based on the feature values whether the image includes the detection target Ob1 ("person" in the present embodiment). When the image includes the detection target Ob1, the detector 13 determines which of the left-side camera 341, the right-side camera 342, and the rear-side camera 343 has captured the image including the detection target Ob1. That is, in detection of the detection target Ob1, the detector 13 determines which of the small area A11 whose image is captured by the left-side camera 341, the small area A12 whose image is captured by the right-side camera 342, and the small area A13 whose image is captured by the rear-side camera 343 includes the detection target Ob1.

The prevention processing unit 14 performs a prevention process of preventing the action of the work machine 3, based on the detection result obtained by the detector 13. In the present embodiment, when the detection result obtained by the detector 13 indicates that the detection target Ob1 (person in this case) is present in the monitored area A1, the prevention processing unit 14 performs the prevention process. The term "prevention process" as used in the present disclosure refers to a process that leads to prevention of the action of the work machine 3. The prevention process includes, for example, a process in which the display device 2 is controlled to provide a warning with a sound or light (including a display) to the user U1 (operator) who operates the work machine 3, in order to indirectly prevent the action of the work machine 3. Furthermore, the prevention process includes a process in which the traveling unit 31, the turning unit 32, the work unit 33, or the like of the work machine 3 is controlled, in order to directly prevent the action of the work machine 3.

Specifically, the present embodiment describes an example in which the prevention processing unit 14 turns off the cutoff relay 352 when the detection target Ob1 is present in the monitored area A1. This causes the control valves 46 connected to the power supply 351 via the cutoff relay 352 to be in the non-energized state, forcibly stopping the output from the hydraulic actuators corresponding to the control valves 46. That is, in the present embodiment, the prevention process includes a restriction process of restricting the action of the work machine 3. The term "restriction process" as used in the present disclosure refers to a process that leads to restriction of the action of the work machine 3. Examples of the restriction process include a process of prohibiting (disabling) the traveling unit 31 from performing a traveling action, a process of prohibiting (disabling) the turning unit 32 from performing a turning action, and a process of prohibiting (disabling) the work unit 33 from performing an action. This makes it possible to forcibly restrict the action of the work machine 3 irrespective of the operation performed by the user U1 (operator). Thus, it is possible to avoid contact between the body 30 and the detection target Ob1 due to the action of the work machine 3.

The detector 13 is not an essential component of the control system 1. For example, the control system 1 may be configured such that a detection result is acquired from an external detector and the prevention processing unit 14 performs the prevention process based on the detection result.

### [3] Method of controlling work machine

An example of a method of controlling the work machine 3 that is performed by the control system 1 (hereinafter simply referred to as a "control method") will be mainly described below with reference to FIGS. 5 to 9.

The control method according to the present embodiment is performed by the control system 1 mainly composed of a computer system. In other words, the control method according to the present embodiment is embodied by a work machine control program (hereinafter simply referred to as a "control program"). Thus, the control program according to the present embodiment is a computer program for causing one or more processors to perform processes related to the control method. Such a control program may be executed, for example, by the control system 1 in cooperation with the display device 2.

The control system 1 performs the following various processes related to the control method, in response to a specific start operation that is set in advance for executing the control program. The start operation is, for example, the operation of starting the engine of the work machine 3, or the like. On the other hand, the control system 1 ends the following various processes related to the control method, in response to a specific end operation that is set in advance. The end operation is, for example, the operation of stopping the engine of the work machine 3, or the like.

### [3.1] Display screen

First, a configuration of the display screen Dp1 that is displayed on the display unit 23 of the display device 2 using the control method according to the present embodiment will be described. In the figures such as FIG. 5 showing the display screen Dp1 displayed on the display unit 23 of the display device 2, the dot-dashed lines, leader lines, and reference signs that indicate regions are used merely for the purpose of description, and are not actually displayed on the display device 2.

The display screen Dp1 shown in FIG. 5 is a home screen Dp11 that is displayed first using the control method. Thus, the display processing unit 11 of the control system 1 generates, for example, the display screen Dp1 as shown in FIG. 5, and performs a display process of causing (the display unit 23 of) the display device 2 to display the display screen Dp1. The home screen Dp11 is a basic display screen Dp1 first displayed on the display device 2 while the work machine 3 is in operation. The display screen Dp1 as the home screen Dp11 can perform a transition to various types of display screen Dp1 including a menu screen, a crane screen, a mode screen, a PTO screen, and the like according to an operation received by the operation unit 22.

As shown in FIG. 5, the display screen Dp1 as the home screen Dp11 includes a first region R1, the second region R2, a third region R3, a fourth region R4, a fifth region R5, a sixth region R6, a seventh region R7, an eighth region R8, a ninth region R9, and a tenth region R10. In the control method according to the present embodiment, for example, the captured images Im11, Im12, and Im13 of the monitored area A1 (the small areas A11, A12, and A13) are displayed in the second region R2 that occupies most of the display screen Dp1.

Specifically, the display screen Dp1 is divided in the longitudinal direction (up-down direction) into four regions. Each of the three regions from the top is further divided in the lateral direction (left-right direction) into three regions. Thus, the entire display screen Dp1 is divided into ten regions. The regions in the second row from the top serve as the first region R1, the second region R2, and the third region R3 in order from left to right. The region in the lowermost row serves as the fourth region R4. Furthermore, the regions in the third row from the top serve as the fifth region R5, the sixth region R6, and the seventh region R7 in order from left to right, and the regions in the uppermost row serve as the eighth region R8, the ninth region R9, and the tenth region R10 in order from left to right. Of the four regions into which the display screen Dp1 is divided in the longitudinal direction, the region in the second row from the top (region divided into the first region R1, the second region R2, and the third region R3) has the largest longitudinal size. Of the three regions into which the display screen Dp1 is divided in the lateral direction, the middle region (region divided into the second region R2, the sixth region R6, and the ninth region R9) has the largest lateral size.

However, the arrangement and size of the regions are merely an example, and can be changed as appropriate. The regions may not necessarily be clearly separated by a boundary. For example, in the example shown in FIG. 5, the second region R2 and the third region R3 are clearly separated by the boundary, but no boundary is present between the first region R1 and the second region R2. As a matter of course, the first region R1 and the second region R2 may be clearly separated by a boundary.

The first region R1 is a rectangular region extending in the longitudinal direction. In the first region R1, for example, remaining amount information G1 on the amount of fuel (e.g., light oil) remaining in the engine is displayed. The display processing unit 11 generates the remaining amount information G1 displayed on the display screen Dp1, for example, based on an output (sensor signal) from a remaining amount sensor.

The second region R2 is a rectangular region extending in the lateral direction, and as described above, the captured images Im11, Im12, and Im13, and the like are displayed in the second region R2. The captured image Im11 is an image of the small area A11 on the left side of the operator unit 321 that is captured by the left-side camera 341, and the captured image Im12 is an image of the small area A12 on the right side of the operator unit 321 that is captured by the right-side camera 342. The captured image Im13 is an image of the small area A13 on the rear side of the operator unit 321 that is captured by the rear-side camera 343. The display processing unit 11 causes the captured images Im11, Im12, and Im13 acquired by the image acquisition unit 12 to be displayed in real time.

Furthermore, in a center portion of the second region R2, an icon Im10 that represents the body 30 as viewed from above is displayed. The icon Im10 schematically indicates the positional relationship of the image capturing ranges (the small areas A11, A12, and A13) of the left-side camera 341, the right-side camera 342, and the rear-side camera 343 as viewed from the body 30. In the present embodiment, the captured images Im11, Im12, and Im13 have a shape obtained by cutting out the center portion of the second region R2 in a rectangular shape. Thus, the icon Im10 displayed in the center portion of the second region R2 is placed to fit the cutout portion of the captured images Im11, Im12, and Im13.

The third region R3 is a rectangular region extending in the longitudinal direction. In the third region R3, an icon Im1 that corresponds to the operating state of the components of the work machine 3 is displayed. In the third region R3, a plurality of icons Im1 can be displayed, and each of the icons Im1 uses a design (pattern) to indicate, for example, the state of the battery, seatbelt, cooling water temperature, hydraulic oil temperature, or the like. Each of the icons Im1 indicates the operating state, for example, using the display mode such as the displayed color or size. The display processing unit 11 determines the state of the components of the work machine 3 using outputs from various sensors (including the cooling water temperature sensor and the hydraulic oil temperature sensor) that detect the operating state of the components of the work machine 3. When an abnormal value is detected in one of the components of the work machine 3, for example, the display processing unit 11 changes the display mode such as the displayed color of the icon Im1 for the one of the components to perform a warning display.

The fourth region R4 is a band-shaped region extending over the entire width of the display screen Dp1. In the fourth region R4, items for operations performed on the display screen Dp1 are displayed. FIG. 5 shows, as an example, the fourth region R4 in which six items "Menu", "Crane", "Mode", "Camera", "PTO", and "Switching" are arranged in this order from left to right. The six items are associated with the respective six push-button switches 221 to 226 of the operation unit 22 that are located directly below the six items. For example, the item "Menu" is associated with the push-button switch 221, and the item "Crane" is associated with the push-button switch 222. Thus, for example, when the push-button switch 224 corresponding to the item "Camera" is operated by the user U1 (see FIG. 4), the item "Camera" is operated (selected).

Furthermore, in the present embodiment, in the fourth region R4, one of the items is highlighted to also respond to an operation of the operation dial (or cursor key) of the operation unit 22, or the like. In the example shown in FIG. 5, the item "Menu" is highlighted, and the highlighted item is switched according to an operation of the operation dial (or cursor key), or the like. While the desired item is highlighted, the user U1 can operate a determination button to select the desired item. Thus, for example, when the determination button is operated after the highlighted item is switched to the item "Camera", the item "Camera" is operated (selected). When the operation unit 22 includes a touch panel, the user U1 can perform the operation of touching the desired item on the display screen Dp1 to select the desired item.

In the fifth region R5, a warning display icon that indicates that an abnormal value has been detected by various sensors (including the cooling water temperature sensor and the hydraulic oil temperature sensor) is displayed. In the sixth region R6, for example, information on the work unit 33 in operation in the work machine 3 is displayed. In the seventh region R7, for example, information on the operating state of the work machine 3 such as the engine rotational speed is displayed. In the eighth region R8, for example, the current time is displayed. In the ninth region R9, for example, information on the item to which the display screen Dp1 currently displayed belongs is displayed. In the tenth region R10, for example, information on the operating time (hour meter) of the work machine 3 is displayed.

In the present embodiment, the display processing unit 11 switches the display screen Dp1 displayed on the display device 2 between a plurality of screens including the home screen Dp11 described above and an enlarged screen Dp12 as shown in FIG. 7. That is, the display screen Dp1 displayed on the display device 2 can be switched from the home screen Dp11 described above to the enlarged screen Dp12 as shown in FIG. 7.

The enlarged screen Dp12 shown in FIG. 7 is a screen on which the second region R2 is enlarged as compared with on the home screen Dp11 to display the second region R2 of the display screen Dp1 in full screen. Thus, the display processing unit 11 switches from a normal mode in which the home screen Dp11 is displayed to the full screen mode to cause the display unit 23 of the display device 2 to display the enlarged screen Dp12 on which the second region R2 is displayed in full screen.

In the example shown in FIG. 7, the enlarged screen Dp12 only includes the second region R2, and the second region R2 is displayed on the entire screen. That is, on the enlarged screen Dp12, the first region R1 and the third region R3 to the tenth region R10 are not displayed, and the second region R2 is displayed in an enlarged view.

Thus, on the enlarged screen Dp12, the captured images Im11, Im12, and Im13 are displayed in an enlarged view as compared with on the home screen Dp11, allowing the captured images Im11, Im12, and Im13 to be displayed in the display mode with high visibility. However, unlike the home screen Dp11, the enlarged screen Dp12 does not include the operating information on the operating state of the work machine 3 such as the remaining amount information G1 in the first region R1.

### [3.2] Details of overhead image

Next, details of the overhead image Im100 displayed using the control method according to the present embodiment will be described.

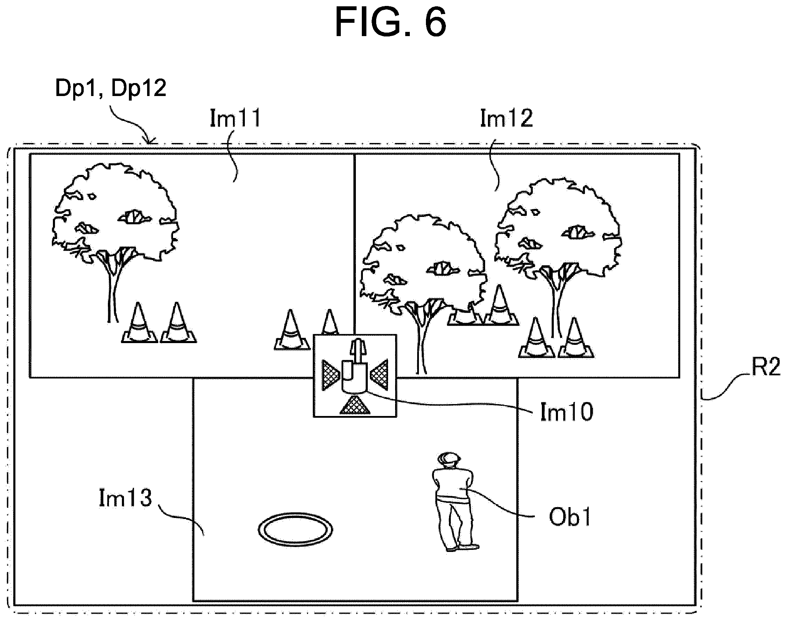

As described above, the display processing unit 11 can cause the overhead image Im100 to be displayed on the display screen Dp1 (enlarged screen Dp12) at least in the full screen mode in which the enlarged screen Dp12 is displayed. Thus, the display processing unit 11 can switch the image displayed in the second region R2 of the display screen Dp1 between the captured images Im11, Im12, and Im13 as shown in FIG. 6 and the overhead image Im100 as shown in FIG. 7, for example, according to a viewpoint switching operation. The viewpoint switching operation is, for example, an operation (selection) of the item "Camera", an operation of a viewpoint switching switch, or the like. Alternatively, the display processing unit 11 may automatically switch the image displayed in the second region R2 between the captured images Im11, Im12, and Im13 and the overhead image Im100, for example, according to the detection result obtained by the detector 13, or the like.

The overhead image Im100 is an image showing the body 30 as viewed from above (the sky). In the present embodiment, the overhead image Im100 is an image including at least the areas on the left side, right side, and rear side of the operator unit 321 as viewed from a user (operator) who is present in (the operator unit 321 of) the work machine 3, irrespective of the orientation of the traveling unit 31. The overhead image Im100 is a type of captured image generated by performing coordinate transformation and composition of the captured image Im11 captured by the left-side camera 341, the captured image Im12 captured by the right-side camera 342, and the captured image Im13 captured by the rear-side camera 343. The present embodiment describes an example in which the overhead image Im100 is generated by the first display processing unit 111 of the display processing unit 11 based on the captured images Im11, Im12, and Im13. However, the present embodiment is not limited to this example, and the overhead image Im100 may not necessarily be generated by the display processing unit 11. The overhead image Im100 may be an image obtained by compositing a captured image with an animation.

In the example shown in FIG. 7, the display processing unit 11 sets the first display region R11 and the second display region R12 in the second region R2 of the display screen Dp1 (enlarged screen Dp12), and causes the overhead image Im100 to be displayed in the first display region R11 and causes the specific image Im200 to be displayed in the second display region R12. The first display region R11 is a region that is part of the display screen Dp1 displayed on the display device 2 and that has a shape obtained by cutting out, as a cutout region R13, a portion of the display screen Dp1 in the circumferential direction as viewed from an own machine reference position P1 that corresponds to the position of the work machine 3 in plan view. The second display region R12 is a region that is part of the display screen Dp1 displayed on the display device 2 and that is located in the cutout region R13.

Specifically, the icon Im10 that represents the body 30 as viewed from above is displayed in the center portion of the second region R2, and the center of the second region R2, which is the center of the icon Im10, is the own machine reference position P1 that corresponds to the position of the work machine 3 in plan view. The first display region R11 in which the overhead image Im100 is displayed has a shape obtained by cutting out, as the cutout region R13, a portion of the display screen Dp1 in the circumferential direction around the own machine reference position P1 (the center of the second region R2). In FIG. 7, the own machine reference position P1 is indicated by a black dot, but as with the reference signs and the like, the black dot is used merely for the purpose of description, and is not actually displayed on the display device 2.

More specifically, the first display region R11 is a fan-shaped region whose periphery includes an arc portion located on the side farther from the own machine reference position P1, and the icon Im10 is located at a position corresponding to the vertex of the fan-shaped region. The term "arc" as used in the present disclosure may not necessarily refer to an arc constituting a part of a perfect circle, and includes a line curved outward in general. Thus, the first display region R11 whose periphery (outline) includes a line curved outward as shown in FIG. 7 can be considered as a fan-shaped region whose periphery includes an arc portion. In other words, the periphery of the first display region R11 includes an arc R110, and a pair of edges R111 and R112 that extend in the radial direction and are connected to the respective ends of the arc R110, and the region surrounded by the arc R110 and the pair of edges R111 and R112 has a fan shape.

The cutout region R13 is a region that is part of a circular (annular) region whose center is located at the own machine reference position P1 and that is obtained by cutting off the first display region R11 at the pair of edges R111 and R112 from the circular (annular) region. In the example shown in FIG. 7, the angle between the pair of edges R111 and R112 of the first display region R11 (the central angle of the fan-shaped region) is approximately 260 degrees. Thus, the central angle of the cutout region R13 is approximately 100 degrees.

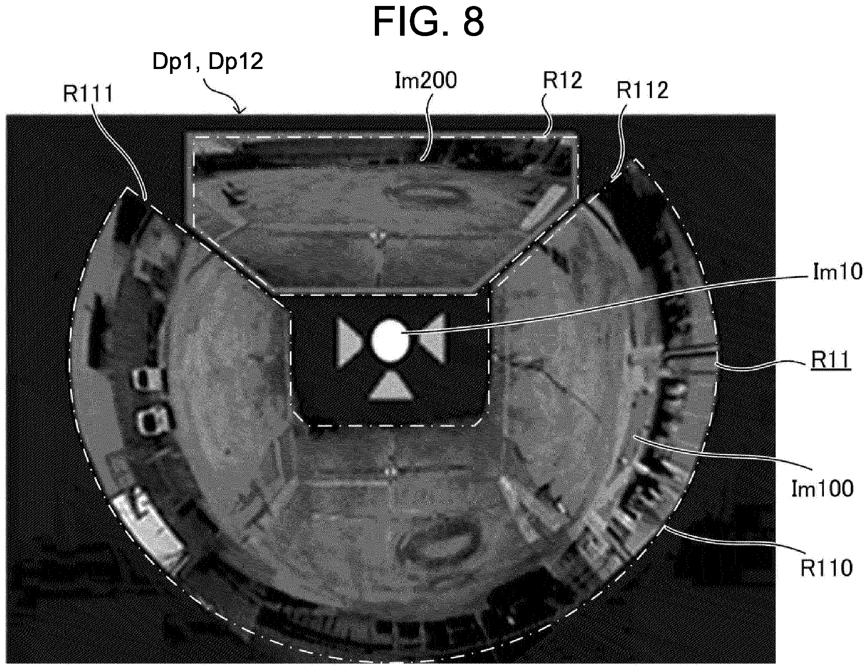

FIG. 8 shows an example of the display screen Dp1 (enlarged screen Dp12) that is actually displayed on the display device 2. As shown in FIG. 8, the overhead image Im100 displayed in the first display region R11 is obtained by performing coordinate transformation and seamless composition of the captured images Im11, Im12, and Im13 to generate an image showing the body 30 as viewed from above (the sky). In FIG. 8, an object displayed as the icon Im10 is not an object that represents the body 30 but an object in which a position corresponding to the body 30 is indicated by a circle.

Thus, the control method according to the present embodiment includes acquiring the captured images Im11, Im12, and Im13 of the monitored area around the work machine 3, and causing the overhead image Im100 based on the captured images Im11, Im12, and Im13 to be displayed in the first display region R11. The first display region R11 is a region that is part of the display screen Dp1 displayed on the display device 2 and that has a shape obtained by cutting out, as a cutout region R13, a portion of the display screen Dp1 in the circumferential direction as viewed from an own machine reference position P1 that corresponds to the position of the work machine 3 in plan view. The control method further includes causing at least part of the specific image Im200 to be displayed in the second display region R12 that is part of the display screen Dp1 and that is located in the cutout region R13.

In short, the display screen Dp1 including the overhead image Im100 and the specific image Im200 is displayed on the display device 2. Furthermore, the overhead image Im100 is displayed in the first display region R11 having a shape obtained by cutting out, as the cutout region R13, a portion of the display screen Dp1 in the circumferential direction as viewed from the own machine reference position P1, and at least part of the specific image Im200 is displayed in the second display region R12 located in the cutout region R13. Accordingly, the display device 2 can display, together with the overhead image Im100 having a shape obtained by cutting out a portion of the display screen Dp1, another image (specific image Im200) using the cutout region R13, thus allowing the overhead image Im100 and the specific image Im200 as another image to be displayed in an integrated manner. This enables an operator to visually recognize, without a feeling of strangeness, the overhead image Im100 and the specific image Im200 displayed in an integrated manner, making it easy for the operator to intuitively understand various types of information on the operation of the work machine 3.

In the present embodiment, as shown in FIGS. 7 and 8, the second display region R12 is located above the first display region R11 on the display screen Dp1. The term "above" as used here refers to a position in an upper portion of the display screen Dp1 as viewed from a user (operator) who visually recognizes the display screen Dp, and refers to one side of the longitudinal direction (up-down direction) on the display screen Dp1 irrespective of the direction in real space. Thus, the first display region R11 has a shape obtained by cutting out, as the cutout region R13, the upper portion of the display screen Dp1 as viewed from the own machine reference position P1, and the second display region R12 is located in the cutout region R13. This arrangement enables the specific image Im200 to be displayed at a position at which the operator can easily visually recognize the specific image Im200, while maintaining the visibility of the overhead image Im100 displayed in the first display region R11.

The cutout region R13 is located at a position that corresponds to the front side of the work machine 3 in the overhead image Im100. That is, in the present embodiment, the upper portion of the display screen Dp1 corresponds to the front side of the work machine 3 in the overhead image Im100, and the second display region R12 is located on the front side of the work machine 3. Of the areas around the work machine 3, the operator can most easily visually recognize the area on the front side of the work machine 3; thus, when the cutout region R13 is a region in the overhead image Im100 that is located at a position corresponding to the front side of the work machine 3, the overhead image Im100 can be displayed without a significant reduction in the visibility of the areas around the work machine 3.

In the present embodiment, as shown in FIGS. 7 and 8, a space is provided between the first display region R11 and the second display region R12 on the display screen Dp1. That is, the second display region R12 is set apart from the pair of edges R111 and R112 of the first display region R11. Thus, a space is formed between the overhead image Im100 displayed in the first display region R11 and the specific image Im200 displayed in the second display region R12, making it easy for an operator to distinguish between the overhead image Im100 and the specific image Im200. This contributes to higher visibility of each of the overhead image Im100 and the specific image Im200.

In the present embodiment, at least part of the periphery of the second display region R12 is located along part of the periphery of the first display region R11 on the display screen Dp1. In the example shown in FIG. 7, the second display region R12 has a hexagonal periphery, and two sides of the hexagonal periphery are located along the pair of edges R111 and R112 of the periphery of the first display region R11. In this case, in particular, the two sides of the periphery (hexagonal periphery) of the second display region R12 are parallel to the pair of edges R111 and R112. This enables the specific image Im200 to be displayed in a relatively large size in the second display region R12, contributing to higher visibility of the specific image Im200.

In the present embodiment, the specific image Im200 is an image related to the captured images Im11, Im12, and Im13 constituting a part of the overhead image Im100. Thus, as described above, the overhead image Im100 is generated by compositing the captured images Im11, Im12, and Im13, and the second display processing unit 112 causes an image related to the captured images Im11, Im12, and Im13 to be displayed as the specific image Im200 in the second display region R12. The image related to the captured images Im11, Im12, and Im13 may be, for example, at least part of the captured images Im11, Im12, and Im13, or may be an image obtained by performing image processing such as coordinate transformation or filtering on the captured images Im11, Im12, and Im13. This enables an operator to visually recognize the image related to the captured images Im11, Im12, and Im13 together with the overhead image Im100, allowing the operator to easily view the situation around the body 30.

The specific image Im200 is an image related to the captured image Im13 of the area on the rear side of the work machine 3. Thus, an image related to the captured image Im13, which is an image of the small area A13 on the rear side of the operator unit 321 that is captured by the rear-side camera 343, is displayed as the specific image Im200 in the second display region R12. This enables the specific image Im200 to cover the area on the rear side of the body 30, which is likely to be a blind spot for the operator.

In the present embodiment, in particular, the specific image Im200 is an image obtained by transforming the captured image Im13 in a transformation mode that is different from a transformation mode in which the overhead image Im100 is obtained by transforming the captured image Im13. The overhead image Im100 is an image showing the body 30 as viewed from above (the sky); thus, the captured image Im13 captured by the rear-side camera 343 is subjected to transformation such as coordinate transformation to obtain an image of the small area A13 in plan view. On the other hand, as in the example shown in FIG. 6, the captured image Im13 displayed as the specific image Im200 in the second display region R12 is subjected to transformation such as coordinate transformation to obtain an image of the small area A13 as viewed from a user (operator) who is present in (the operator unit 321 of) the work machine 3. Thus, an image of the small area A13 displayed as the specific image Im200 is displayed using a transformation mode that is different from a transformation mode for an image of the small area A13 displayed in the overhead image Im100, allowing an operator to more carefully view the small area A13.

The display screen Dp1 includes an object (icon Im10) that indicates the positional relationship of the image capturing ranges in the overhead image Im100 as viewed from the work machine 3. That is, as described above, the icon Im10 schematically indicating the positional relationship of the image capturing ranges (the small areas A11, A12, and A13) of the left-side camera 341, the right-side camera 342, and the rear-side camera 343 as viewed from the body 30 is displayed in the center portion of the second region R2. The icon Im10 is located at the own machine reference position P1 in the overhead image Im100; thus, the overhead image Im100 is displayed around the icon Im10 so that the positional relationship of the image capturing ranges in the overhead image Im100 with respect to the icon Im10 corresponds to the positional relationship of the image capturing ranges with respect to the body 30 as viewed from above. That is, the overhead image Im100 is displayed so that the captured image Im11 of the small area A11 on the left side of the body 30 is located on the left side of the icon Im10 and that the captured image Im12 of the small area A12 on the right side of the body 30 is located on the right side of the icon Im10 and that the captured image Im13 of the small area A13 on the rear side of the body 30 is located on the lower side of the icon Im10.

Thus, in the control method according to the present embodiment, the positional relationship of the monitored area A1 with respect to the work machine 3 in real space is reflected in the positional relationship of the monitored area A1 in the overhead image Im100 with respect to the icon Im10 on the display screen Dp1. This makes it easy for the operator to intuitively understand, on the display screen Dp1, a portion of the monitored area A1 whose image has been captured to obtain the overhead image Im100.

The overhead image Im100 may not necessarily be displayed in the full screen mode in which the enlarged screen Dp12 is displayed. The overhead image Im100 may be displayed in the normal mode in which the home screen Dp11 including the first region R1 and the third region R3 to the tenth region R10 in addition to the second region R2 is displayed.

### [3.3] Overall process

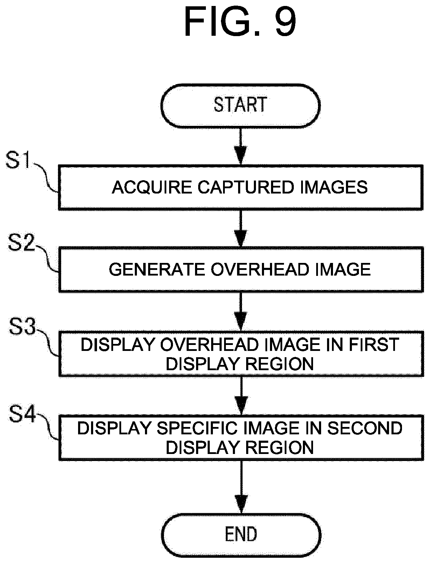

Next, an overall flow of a process related to the control method will be described with reference to FIG. 9. FIG. 9 is a flowchart showing an example of the process related to the control method, in particular, related to the display of the overhead image Im100.

As shown in FIG. 9, the image acquisition unit 12 of the control system 1 acquires the captured images Im11, Im12, and Im13 from the left-side camera 341, the right-side camera 342, and the rear-side camera 343 (S1). Then, the display processing unit 11 of the control system 1 generates the overhead image Im100 based on the captured images Im11, Im12, and Im13 (S2).

The first display processing unit 111 of the display processing unit 11 causes the overhead image Im100 to be displayed in the first display region R11 that is part of the display screen Dp1 and that has a shape obtained by cutting out, as the cutout region R13, a portion of the display screen Dp1 in the circumferential direction as viewed from the own machine reference position P1 that corresponds to the position of the work machine 3 in plan view (S3). Furthermore, the second display processing unit 112 of the display processing unit 11 causes at least part of the specific image Im200 to be displayed in the second display region R12 that is part of the display screen Dp1 and that is located in the cutout region R13 (S4).

As a result, as shown in FIGS. 7 and 8, the overhead image Im100 and the specific image Im200 are respectively displayed in the first display region R11 and the second display region R12 on the display screen Dp1. The control system 1 repeatedly performs the processes in steps S1 to S4 described above. However, the flowchart shown in FIG. 9 is merely an example, and processes may be added or omitted as appropriate, or the order of the processes may be changed as appropriate.

### [4] Modifications

Modifications of Embodiment 1 are listed below. The modifications described below can be applied in combination as appropriate.

The control system 1 of the present disclosure includes a computer system. The computer system is mainly composed of one or more processors and one or more memories as hardware. The one or more processors execute a program recorded in the one or more memories of the computer system to implement the functions as the control system 1 of the present disclosure. The program may be recorded in advance in the one or more memories of the computer system, may be provided through a telecommunication line, or may be recorded and provided in a non-transitory recording medium such as a memory card, an optical disc, or a hard disk drive that is readable by the computer system. Some or all of the functional units included in the control system 1 may be composed of an electronic circuit.

The control system 1 may not necessarily be configured such that at least some of the functions of the control system 1 are provided in a single housing, and the components of the control system 1 may be dispersed in a plurality of housings. Alternatively, the functions dispersed in the plurality of devices (e.g., the control system 1 and the display device 2) in Embodiment 1 may be provided in a single housing. Furthermore, at least some of the functions of the control system 1 may be implemented by a cloud (cloud computing) or the like.

The power source of the work machine 3 may not necessarily be a diesel engine, and may be, for example, an engine other than a diesel engine, or may be a motor (electric motor), or a hybrid power source including an engine and a motor (electric motor).

The display device 2 may not necessarily be a dedicated device, and may be, for example, a general-purpose terminal such as a laptop computer, a tablet terminal, or a smartphone. Furthermore, the display unit 23 may not necessarily be configured to directly display a display screen as with a liquid crystal display or an organic EL display, and for example, the display unit 23 may be configured to display a display screen by projection as with a projector.

The operation unit 22 may be configured to use a means other than a push-button switch, a touch panel, or an operation dial to receive an input of information. For example, the operation unit 22 may be configured to use a pointing device such as a keyboard or a mouse, voice input, gesture input, or other terminals to receive an input of an operation signal.

The restriction process performed by the prevention processing unit 14 may not necessarily be a process of prohibiting (disabling) the work machine 3 from performing an action (turning action, etc.), as long as the restriction process restricts the action of the work machine 3. The restriction process may be, for example, a process of reducing the speed of the action (turning action, etc.) of the work machine 3, a process of reducing the action range (turning angle, etc.) of the work machine 3, a process of restricting the allowable area for the action of the work machine 3, or the like.

The function related to the prevention process performed by the prevention processing unit 14 is not essential, and the prevention processing unit 14 can be omitted as appropriate. Furthermore, the function related to the detection process performed by the detector 13 is not essential in the first place, and the detector 13 can be omitted as appropriate.

The display processing unit 11 may perform single-screen display or two-screen display, in addition to or instead of three-screen display in which three screens for the captured images Im11, Im12, and Im13 of the monitored area A1 are displayed in the second region R2 of the display screen Dp1. In the single-screen display, the display processing unit 11 displays a single screen for one of the captured images Im11, Im12, and Im13 in the second region R2, and in the two-screen display, the display processing unit 11 displays two screens for two of the captured images Im11, Im12, and Im13 in the second region R2. As an example of the two-screen display, the display processing unit 11 displays, in the second region R2, two screens: a screen for the captured image Im12 captured by the right-side camera 342 and a screen for the captured image Im13 captured by the rear-side camera 343. The captured image Im12 and the captured image Im13 are arranged, for example, in the left-right direction in the second region R2.

The sensors for detecting the detection target Ob1 in the monitored area A1 around the work machine 3 may not necessarily be the left-side camera 341, the right-side camera 342, and the rear-side camera 343, and may include one, two, or four or more cameras (image sensors). Furthermore, for example, a camera that is capable of capturing an image in all directions as viewed from the work machine 3 such as an omnidirectional camera (360-degree camera) may be used to detect the detection target Ob1 in the monitored area A1. The sensors for detecting the detection target Ob1 in the monitored area A1 may include, for example, a sensor such as a motion sensor, a sonar sensor, a radar, or a light detection and ranging (LiDAR) sensor, in addition to or instead of a camera. The sensors for detecting the detection target Ob1 in the monitored area A1 may be a three-dimensional sensor that measures the distance to the detection target Ob1 using the time-of-flight (TOF) method in which the distance to a distance measurement point is measured based on the time required for light or sound to travel to and from the distance measurement point.

The detection target Ob1 may include a moving object such as a vehicle (including another work machine), a structure such as a wall or a pillar, a plant, an animal, a step, a trench, or other obstacles, in addition to or instead of a "person".

The second display region R12 may not necessarily be located above the first display region R11 on the display screen Dp1, and for example, the second display region R12 may be located below the first display region R11 on the display screen Dp1. On the display screen Dp1, a space may not necessarily be provided between the first display region R11 and the second display region R12, and no space may be provided between the first display region R11 and the second display region R12.

The specific image Im200 may not necessarily be an image related to the captured images Im11, Im12, and Im13 constituting a part of the overhead image Im100. For example, the specific image Im200 may represent information on the operating state of the work machine 3 such as cooling water temperature and hydraulic oil temperature. Furthermore, the specific image Im200 may not necessarily be an image related to the captured image Im13 of the area on the rear side of the work machine 3, and the specific image Im200 may be, for example, an image related to the captured image Im11 of the area on the left side of the work machine 3. The specific image Im200 may not necessarily be an image obtained by transforming the captured images Im11, Im12, and Im13 in a transformation mode that is different from a transformation mode in which the overhead image Im100 is obtained by transforming the captured images Im11, Im12, and Im13. The specific image Im200 may be obtained in the same transformation mode as the overhead image Im100.

The cutout region R13 may not necessarily be located at a position that corresponds to the front side of the work machine 3 in the overhead image Im100, and the cutout region R13 may be located, for example, at a position that corresponds to the rear side of the work machine 3 in the overhead image Im100. The display screen Dp1 may not necessarily include an object (icon Im10) that indicates the positional relationship of the image capturing ranges in the overhead image Im100 as viewed from the work machine 3, and the icon Im10 may be omitted as appropriate.

### (Embodiment 2)

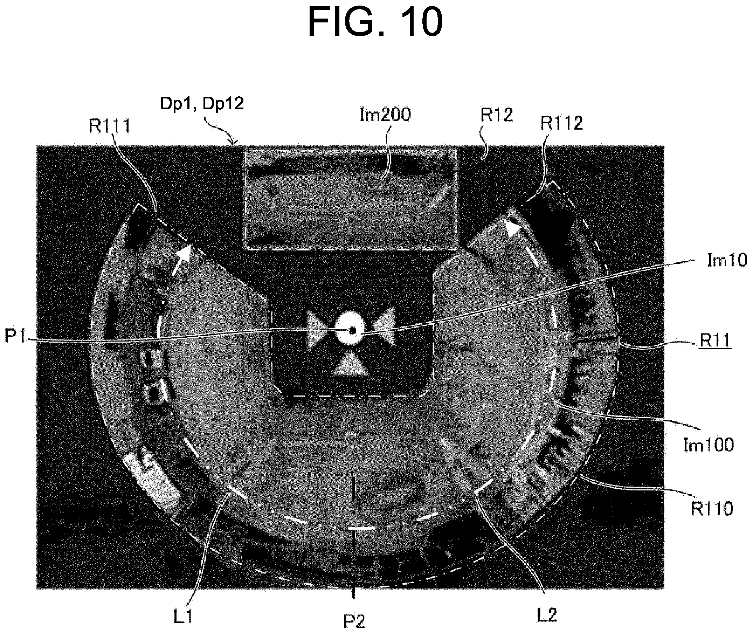

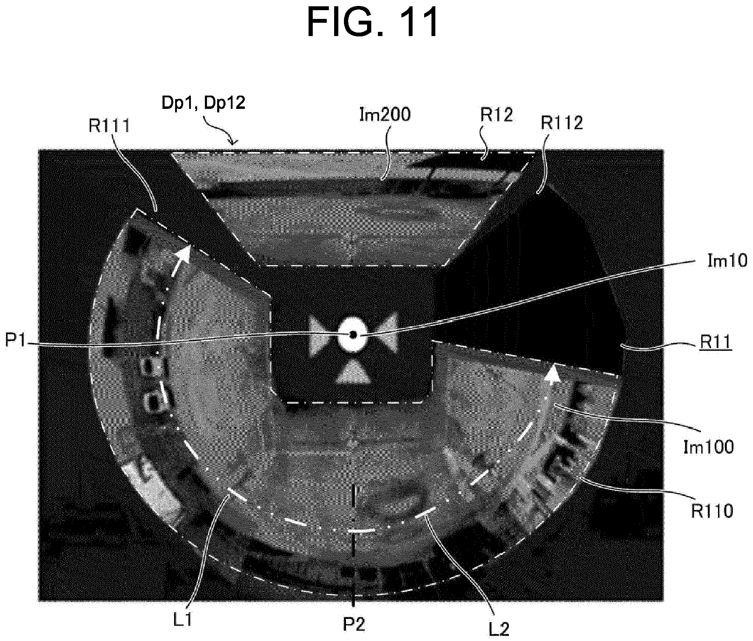

As shown in FIGS. 10 and 11, the work machine 3 according to the present embodiment is different from the work machine 3 according to Embodiment 1 in the content displayed in the second region R2 of the display screen Dp1. In the following description, the same components as those in Embodiment 1 are denoted by the same reference signs, and the description thereof is omitted as appropriate.

In the present embodiment, the work machine 3 is not configured such that at least part of the periphery of the second display region R12 is located along part of the periphery of the first display region R11. That is, in the present embodiment, the work machine 3 is not configured such that at least part of the periphery of the second display region R12 is located along part of the periphery of the first display region R11. For example, in the example shown in FIG. 10, the second display region R12 has a rectangular periphery, and a pair of adjacent corners of the rectangular periphery face the respective pair of edges R111 and R112 of the periphery of the first display region R11. In the example shown in FIG. 11, the second display region R12 has a hexagonal periphery; however, two sides of the hexagonal periphery are inclined with respect to the pair of edges R111 and R112 of the periphery of the first display region R11. Thus, the work machine 3 may not necessarily be configured such that at least part of the periphery of the second display region R12 is located along part of the periphery of the first display region R11.

In the present embodiment, in the first display region R11 on the display screen Dp1, the distance in a clockwise direction from a rear reference position P2 that corresponds to the rear side of the work machine 3 to the cutout region R13 in the circumferential direction around the own machine reference position P1 is different from the distance in a counterclockwise direction from the rear reference position P2 to the cutout region R13 in the circumferential direction around the own machine reference position P1. Thus, as shown in FIGS. 10 and 11, when the rear reference position P2 is set to a position that corresponds to the rear side of the work machine 3 (directly below the own machine reference position P1) in the overhead image Im100, a distance L1 in the clockwise direction from the rear reference position P2 to the edge R111 is different from a distance L2 in the counterclockwise direction from the rear reference position P2 to the edge R112. In the example shown in FIG. 10, the distance L1 in the clockwise direction from the rear reference position P2 to the edge R111 is smaller than the distance L2 in the counterclockwise direction from the rear reference position P2 to the edge R112 (L1 < L2). In the example shown in FIG. 11, the distance L1 in the clockwise direction from the rear reference position P2 to the edge R111 is larger than the distance L2 in the counterclockwise direction from the rear reference position P2 to the edge R112 (L1 > L2).

Thus, the first display region R11 in which the overhead image Im100 is displayed is left-right asymmetrical on the display screen Dp1. For example, in the work machine 3, the operator unit 321 may be shifted in the left-right direction D3 of the body 30, and in such a case, a left-right asymmetrical image is supposed to be generated as the overhead image Im100. The configuration of the present embodiment enables such a left-right asymmetrical image as the overhead image Im100 to be displayed based on the actual positional relationship.

The configuration according to Embodiment 2 may be appropriately used in combination with various configurations (including modifications) described in Embodiment 1.

### [Appendices]

A summary of the invention extracted from the embodiments described above will be appended. Configurations and processing functions described in the following appendices can be selected and arbitrarily combined.

### <Appendix 1>

A work machine control method including
acquiring a captured image of a monitored area around a work machine,
causing an overhead image based on the captured image to be displayed in a first display region that is part of a display screen displayed on a display device and that has a shape obtained by cutting out, as a cutout region, a portion of the display screen in a circumferential direction as viewed from an own machine reference position that corresponds to a position of the work machine in plan view, and
causing at least part of a specific image to be displayed in a second display region that is part of the display screen and that is located in the cutout region.

### <Appendix 2>

The work machine control method according to appendix 1, wherein
the second display region is located above the first display region on the display screen.

### <Appendix 3>

The work machine control method according to appendix 1 or 2, wherein
a space is provided between the first display region and the second display region on the display screen.

### <Appendix 4>

The work machine control method according to any one of appendices 1 to 3, wherein
at least part of a periphery of the second display region is located along part of a periphery of the first display region on the display screen.

### <Appendix 5>

The work machine control method according to any one of appendices 1 to 4, wherein
the specific image is an image related to the captured image constituting a part of the overhead image.

### <Appendix 6>

The work machine control method according to appendix 5, wherein
the specific image is an image related to the captured image capturing a rear side of the work machine.

### <Appendix 7>

The work machine control method according to appendix 5 or 6, wherein
the specific image is an image obtained by transforming the captured image in a transformation mode that is different from a transformation mode in which the overhead image is obtained by transforming the captured image.

### <Appendix 8>

The work machine control method according to any one of appendices 1 to 7, wherein
the cutout region is located at a position that corresponds to a front side of the work machine in the overhead image.

### <Appendix 9>

The work machine control method according to any one of appendices 1 to 8, wherein
the display screen includes an object that indicates a positional relationship of image capturing ranges in the overhead image as viewed from the work machine.

### <Appendix 10>

The work machine control method according to any one of appendices 1 to 9, wherein
in the first display region on the display screen, a distance in a clockwise direction from a rear reference position that corresponds to a rear side of the work machine to the cutout region in the circumferential direction around the own machine reference position is different from a distance in a counterclockwise direction from the rear reference position to the cutout region in the circumferential direction around the own machine reference position.

### <Appendix 11>

A work machine control program for causing one or more processors to perform the work machine control method according to any one of appendices 1 to 10.

### REFERENCE SIGNS LIST

1 Work machine control system
2 Display device
3 Work machine
12 Image acquisition unit
30 Body
111 First display processing unit
112 Second display processing unit
A1 Monitored area
Dp1 Display screen
Im10 Icon (object)
Im11, Im12, Im13 Captured image
Im100 Overhead image
Im200 Specific image
L1, L2 Distance
Ob1 Detection target
P1 Own machine reference position
P2 Rear reference position
R11 First display region
R12 Second display region
R13 Cutout region

## Claims

1. A work machine control method comprising:
acquiring a captured image of a monitored area around a work machine;
causing an overhead image based on the captured image to be displayed in a first display region that is part of a display screen displayed on a display device and that has a shape obtained by cutting out, as a cutout region, a portion of the display screen in a circumferential direction as viewed from an own machine reference position that corresponds to a position of the work machine in plan view; and
causing at least part of a specific image to be displayed in a second display region that is part of the display screen and that is located in the cutout region.

2. The work machine control method according to claim 1, wherein
the second display region is located above the first display region on the display screen.

3. The work machine control method according to claim 1 or 2, wherein
a space is provided between the first display region and the second display region on the display screen.

4. The work machine control method according to claim 1 or 2, wherein
at least part of a periphery of the second display region is located along part of a periphery of the first display region on the display screen.

5. The work machine control method according to claim 1 or 2, wherein
the specific image is an image related to the captured image constituting a part of the overhead image.

6. The work machine control method according to claim 5, wherein
the specific image is an image related to the captured image of an area on a rear side of the work machine.

7. The work machine control method according to claim 5, wherein
the specific image is an image obtained by transforming the captured image in a transformation mode that is different from a transformation mode in which the overhead image is obtained by transforming the captured image.

8. The work machine control method according to claim 1 or 2, wherein
the cutout region is located at a position that corresponds to a front side of the work machine in the overhead image.

9. The work machine control method according to claim 1 or 2, wherein
the display screen includes an object that indicates a positional relationship of image capturing ranges in the overhead image as viewed from the work machine.

10. The work machine control method according to claim 1 or 2, wherein
in the first display region on the display screen, a distance in a clockwise direction from a rear reference position that corresponds to a rear side of the work machine to the cutout region in the circumferential direction around the own machine reference position is different from a distance in a counterclockwise direction from the rear reference position to the cutout region in the circumferential direction around the own machine reference position.

11. A work machine control program for causing one or more processors to perform the work machine control method according to claim 1 or 2.

12. A work machine control system comprising:
an image acquisition unit that acquires a captured image of a monitored area around a work machine;
a first display processing unit that causes an overhead image based on the captured image to be displayed in a first display region that is part of a display screen displayed on a display device and that has a shape obtained by cutting out, as a cutout region, a portion of the display screen in a circumferential direction as viewed from an own machine reference position that corresponds to a position of the work machine in plan view; and
a second display processing unit that causes at least part of a specific image to be displayed in a second display region that is part of the display screen and that is located in the cutout region.

13. A work machine comprising:
the work machine control system according to claim 12; and
a body on which the display device is mounted.
